(19) Europäisches Patentamt
European Patent Office
Office européen des brevets

(11) EP 0 783 464 B1

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(21) Anmeldenummer: **95933426.9**

(22) Anmeldetag: **25.09.1995**

(51) Int Cl.6: **C03C 17/30**, C09D 183/05, C04B 41/49

(86) Internationale Anmeldenummer:
**PCT/EP95/03785**

(87) Internationale Veröffentlichungsnummer:
**WO 96/09993 (04.04.1996 Gazette 1996/15)**

(54) **MISCHUNG ZUM BEHANDELN VON SILICIUMHALTIGEN SUBSTRATEN**
MIXTURE FOR TREATING SILICON-CONTAINING SUBSTRATES
MELANGE PERMETTANT DE TRAITER DES SUBSTRATS CONTENANT DU SILICIUM

(84) Benannte Vertragsstaaten:
**AT BE CH DE DK ES FR GB IT LI NL SE**

(30) Priorität: **27.09.1994 BE 9400871**

(43) Veröffentlichungstag der Anmeldung:
**16.07.1997 Patentblatt 1997/29**

(73) Patentinhaber: **METALLGESELLSCHAFT AG
60323 Frankfurt am Main (DE)**

(72) Erfinder: **COUTTENIER, André
B-1080 Brüssel (BE)**

(56) Entgegenhaltungen:
**EP-A- 0 476 452**

- **DATABASE WPI Section Ch, Week 9441 Derwent Publications Ltd., London, GB; Class L, AN 94-330369 & JP,A,06 256 756 (SHINETSU CHEM IND CO LTD) , 13.September 1994**
- **CHEMICAL ABSTRACTS, vol. 115, no. 10, 9.September 1991 Columbus, Ohio, US; abstract no. 97863n, Seite 347; & SU,A,1 625 838 (KUBAN STATE UNIVERSITY) 7.Februar 1991**
- **CHEMICAL ABSTRACTS, vol. 107, no. 2, 13.Juli 1987 Columbus, Ohio, US; abstract no. 11806w, Seite 287; & JP,A,61 250 032 (HITACHI, LTD.) 7.November 1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf eine Mischung zum Behandeln von Substraten, welche Siliciumverbindungen enthalten, insbesondere von Glas oder Keramik.

Es ist bekannt, daß die Oberfläche von Substraten, welche Siliciumverbindungen, vorzugsweise Siliciumdioxid oder Silikate, enthalten, mit Mischungen behandelt werden, die ihrerseits als Hauptbestandteil siliciumorganische Verbindungen aufweisen. Diese bekannten Behandlungsmethoden haben beispielsweise den Zweck, die von alkalischen Reinigungsmitteln oder von der Atmosphäre verursachte Korrosion bei aus Glas bestehenden Gegenständen zu vermindern, den Abrieb von auf Glasflaschen aufgeklebten Etiketten zu verringern oder die Verschmutzung von Glas- und Keramikflächen zurückzudrängen.

Aus der EP-PS 0 395 077 ist ein Mittel für die Behandlung von Glasbehältern bekannt, das aus 100 Gewichtsteilen eines Polyorganosiloxans und aus 100 bis 1000 Gewichtsteilen eines flüchtigen Polydimethylsiloxans besteht. Das Polyorganosiloxan enthält neben Methylgruppen substituierte oder unsubstituierte einwertige Kohlenwasserstoffgruppen oder ein Wasserstoffatom sowie eine Hydroxylgruppe oder eine hydrolisierbare Gruppe. Das Polydimethylsiloxan ist ketten- oder ringförmig aufgebaut. Das bekannte Mittel kann außerdem einen Härtungskatalysator enthalten. Als Härtungskatalysator werden Amine, Metallsalze von Caboxylsäuren, Organozinnverbindungen, Titansäureester und quarternäre Ammoniumsalze verwendet. Die Polyorganosiloxane werden durch teilweise Hydrolyse und Kondensation von Alkoxysilanen gewonnen, wobei Hydrolyse und Kondensation in Gegenwart von Wasser und Säuren ablaufen. Mit dem bekannten Mittel sollen Glasbehälter bzw. die auf den Glasbehältern befindlichen Etiketten vor dem korrosiven Angriff von Reinigungsmitteln geschützt werden.

Aus der GB-A 1 344 661 ist ein Gemisch zur Behandlung von Glas- und Keramikflächen bekannt, das aus einem Alkylpolysiloxan, einer Säure und Ethylalkohol oder Isopropylalkohol besteht. Nach dem Aufbringen des Gemisches und dem Verdampfen des Lösungsmittels bleibt auf der Glas- und Keramikfläche ein flüssiger, ölartiger Rückstand zurück, der allerdings nur kurzlebig ist. Dieser ölartige Rückstand soll die Glas- und Keramikfläche vor Korrosion und Verschmutzung schützen.

Der Erfindung liegt die Aufgabe zugrunde, eine Mischung zu schaffen, mit der Substrate, welche Siliciumverbindungen enthalten, insbesondere Glas oder Keramik, vor Verschmutzung und Korrosion dauerhaft geschützt werden können. Die Mischung muß also auf den Substraten eine dünne sowie dichte Schicht bilden, die ein gutes Haftvermögen auf den Substraten hat und außerdem eine gute mechanische Abriebfestigkeit besitzt. Darüber hinaus muß die aus der Mischung gebildete Schicht der Glas- und Keramikfläche hydrophobe Eigenschaften verleihen.

Die der Erfindung zugrundeliegende Aufgabe wird durch die Schaffung einer Mischung gelöst, die aus folgenden Komponenten besteht:

a) Aus der Komponente A, die von mindestens einem Polysiloxan gebildet wird, das Si-H-Bindungen enthält und die allgemeine Formel:

F I = 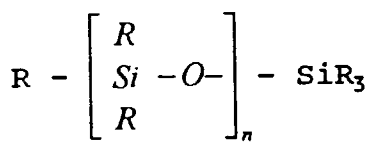

oder

F II = 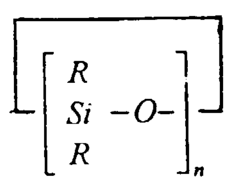

hat, wobei R ein Alkylrest mit 1 bis 12 C-Atomen und/oder ein nicht substituierter oder substituierter Phenylrest ist, wobei die Reste R teilweise durch Wasserstoff ersetzt sind und wobei n in der Formel F I eine Zahl von 2 bis 50 sowie in der Formel F II eine Zahl von 4 bis 50 ist,

b) aus der Komponente B, die von mindestens einem bi-, tri- oder tetrafunktionellen Silan gebildet wird, das die

allgemeine Formel

$$F\ III = R'_z\ Si\ R''_{4-z}$$

hat, wobei R' ein nicht substituierter oder substituierter Alkylrest mit 1 bis 12 C-Atomen, ein Cycloalkylrest mit 5 bis 6 C-Atomen, ein nicht substituierter oder substituierter Phenylrest und/oder ein Vinylrest ist, wobei R" ein Alkoxy- oder ein $CH_3COO$-Rest ist sowie als funktioneller Rest wirkt, wobei der Alkylteil des Alkyoxyrestes 1 bis 12 C-Atome hat und wobei z eine Zahl von 0 bis 2 ist und

c) aus der Komponente C, die von mindestens einer starken, wasserfreien organischen oder anorganischen Säure gebildet wird.

Die Mischung wird bevorzugt aus den-flüssigen Komponenten A, B und C bei Temperaturen bis 80°C unter Rühren hergestellt. Die Mischung sollte bevorzugt bei tiefen Temperaturen gelagert werden, denn hierdurch wird ihre Langzeitstabilität erhöht. Die Mischung kann besonders vorteilhaft nach Verdünnung mit einem Lösungsmittel auf das Substrat aufgebracht werden; sie kann aber auch lösungsmittelfrei, z.B. durch Versprühen/Aufspritzen unter Druck auf das Substrat aufgebracht werden

In weiterer Ausgestaltung der Erfindung ist vorgesehen, daß die Mischung als bifunktionelles Silan ein Dialkyldialkoxysilan, ein Dicycloalkyldialkoxysilan, ein Diphenyldialkoxysilan, ein Dialkyldiacetoxysilan, ein Dicycloalkyldiacetoxysilan, ein Diphenyldiacetoxysilan, ein Vinylmethyldialkoxysilan oder ein Vinylmethyldiacetoxysilan enthält.

Nach der Erfindung hat es sich als besonders vorteilhaft erweisen, wenn bei der Mischung ein Teil des bifunktionellen Silans durch ein Disiloxan ersetzt ist, das die allgemeine Formel

$$F\ IV = R^{IV} - \overset{\displaystyle R^{III}}{\underset{\displaystyle R^{III}}{Si}} - O - \overset{\displaystyle R^{III}}{\underset{\displaystyle R^{III}}{Si}} - R^{IV}$$

hat, wobei $R^{III}$ ein Alkylrest mit 1 bis 12 C-Atomen ist, wobei $R^{IV}$ ein Alkoxyrest ist und wobei der Alkylteil des Alkoxyrestes 1 bis 12 C-Atome hat.

In weiterer Ausgestaltung der Erfindung ist vorgesehen, daß die Mischung als trifunktionelles Silan ein Monoalkyltrialkoxysilan, ein Monocycloalkyltrialkoxysilan, ein Monophenyltrialkoxysilan, ein Monoalkyltriacetoxysilan, ein Monocycloalkyltriacetoxysilan, ein Monophenyltriacetoxysilan, ein Vinyltrialkoxysilan, ein Vinyltriacetoxysilan oder ein Fluoralkyltrialkoxysilan enthält.

In weiterer Ausgestaltung der Erfindung ist vorgesehen, daß die Mischung als tetrafunktionelles Silan einen Kieselsäureester der allgemeinen Formel

$$F\ V = Si\ (OR^V)_4$$

enthält, wobei $R^V$ ein Alkylrest mit 1 bis 12 C-Atomen ist.

Die bifunktionellen Silane wirken als Kettenverlängerer bzw. sie verknüpfen Ketten, während die trifunktionellen und tetrafunktionellen Silane eine räumliche Vernetzung der Ketten herbeiführen. Letztlich sind die Silane dafür verantwortlich, daß aus der erfindungsgemäßen Mischung nach dem Aufbringen auf das Substrat ein ausgehärtetes Harz resultiert. Die bei der Harzbildung ablaufenden Reaktionen werden später erläutert.

Nach der Erfindung ist es besonders vorteilhaft, wenn die Mischung als Polysiloxan ein lineares Polysiloxan mit einer Molmasse von 350 bis 15 000 enthält. Ein derartiges Siloxan verleiht den aus der erfindungsgemäßen Mischung gebildeten Schichten eine gute Elastizität und eine hohe Abriebfestigkeit.

In weiterer Ausgestaltung der Erfindung ist vorgesehen, daß die Mischung als Säure Chlorsulfonsäure,Benzolsulfonsäure, p-Toluolsulfonsäure oder Trichloressigsäure enthält, wobei es vorteilhaft ist, wenn die Mischung 5 bis 7 Gew% Chlorsulfonsäure oder 10 bis 12 Gew% Trichloressigsäure enthält. Mit den Säuren kann eine sehr gleichmäßige Ausbildung des Harzes erreicht werden.

Für den Fall, daß die erfindungsgemäße Mischung ein Silan mit einem oder mehreren Vinylresten enthält, ist es besonders vorteilhaft, wenn der Mischung $FeCl_3$, $ZnCl_2$, $PtCl_6$ oder $SnCl_4$ in einer Menge von 0,0005 bis 0,01 Gew%

zugesetzt werden. Diese wasserfreien Substanzen wirken als Polymerisationskatalysator und begünstigen die Ausbildung einer Harzstruktur.

In einigen Fällen hat es sich als vorteilhaft erwiesen, wenn die erfindungsgemäße Mischung 2 bis 4 Gew% eines niederen Alkohols, vorzugsweise Isopropanol, enthält. Hierdurch wird die Handhabung der Mischung verbessert(Herabsetzung der Viskosität), ohne daß es zu einer vorzeitigen Alkoholyse der Si-H-Bindungen kommt. Die niederen Alkohole enthatlen 1 bis 4 C-Atome.

Schließlich ist nach der Erfindung vorgesehen, daß die Mischung ein Lösungsmittel enthält, das aus mindestens einem unpolaren, flüssigen Kohlenwasserstoff und/oder mindestens einem Ester besteht. Durch das Hinzufügen des Lösungsmittels wird das Aufbringen dünner Schichten auf einem Substrat begünstigt. Die verdünnte, lösungsmittelhaltige, erfindungs- gemäße Mischung ist während einer mehrmonatigen Lagerung bei Raumtemperatur vollkommen stabil. Sie kann nach bekannten Methoden zum Aufbringen dünner Schichten eingesetzt werden (z.B. Aufsprühen, Tauchen). Vor dem Aufbringen der in einem Lösungsmittel gelösten Mischung muß die Oberfläche des Substrats gesäubert werden.

Als Lösungsmittel sind insbesondere Methyl-, Ethyl- oder Butylacetat, n-Heptan, Isooktan, Cyclohexan, Pentan, Toluol und Xylol sowie Mischungen dieser Stoffe geeignet, da sie sich gegenüber den eigentlichen Reaktionspartnern inert verhalten.

Nach der Erfindung ist es besonders vorteilhaft, wenn die Mischung auf 1 Gewichtsteil 5 bis 60 Gewichtsteile des Lösungsmittels enthält. In dieser Verdünnung können aus der Mischung dünne Schichten durch Aufstreichen oder Tauchen auf dem Substrat erzeugt werden. Nach der Erfindung ist es ferner besonders vorteilhaft, wenn die Mischung auf 1 Gewichtsteil 90 bis 100 Gewichtsteile des Lösungsmittels enthält. In dieser Verdünnung können aus der Mischung dünne Schichten durch Aufsprühen auf dem Substrat erzeugt werden.

Bei der Herstellung und Verarbeitung der Mischung laufen folgende Reaktionen ab. Während des Mischens der Komponenten A, B und C kommt es durch die Wirkung der Komponente C insbesondere zur Aufspaltung der cyclischen Polysiloxane und daneben in geringem Umfang zu einer Hydrolyse von Si-H-Bindungen der Polysiloxane unter Bildung von Si-OH-Gruppen. Die Hydrolyse wird von dem Wasser bewirkt, das in der Mischapparatur bzw. in den Chemikalien in Spuren vorhanden ist. Nach dem Verdünnen der Mischung mit dem Lösungsmittel und dem Auftragen der verdünnten Mischung auf das Substrat verdampft das Lösungsmittel und gleichzeitig erfolgt die Bildung eines Harzes aus den Komponenten A und B, das mit fortschreitender Polymerisation und Vernetzung der Komponenten aushärtet und außerdem auf dem Substrat durch Bildung von Si-O-Si-Bindungen verankert wird. Unter dem Einfluß der Komponente C werden Si-H-Bindungen der Komponente A durch das in der Atmosphäre befindliche und auf dem Substrat oberflächlich adsorbierte bzw. gebundene Wasser unter Bildung von Wasserstoff und Si-OH-Gruppen hydrolysiert, die ihrerseits unter dem Einfluß der Komponente C mit den funktionellen Alkoxy- oder $CH_3COO$-Resten der Komponente B unter Bildung von Alkoholen oder Essigsäure reagieren, wobei die Komponenten A und B über Si-O-Si-Bindungen miteinander verknüpft und in der Fläche sowie räumlich miteinander vernetzt werden. Es ist nicht erforderlich, daß dem Reaktionssystem zusätzlich Wasser zugeführt wird, da das in der Atmosphäre und an der Substratoberfläche vorhandene Wasser für eine hinreichende Hydrolyse von Si-H-Bindungen ausreicht. Die Ausbildung von Si-O-Si-Bindungen zwischen dem Harz und dem Substrat erfolgt unter dem Einfluß der Komponente C durch Kondensation zwischen hydrolysierten Si-H-Bindungen und den Si-OH-Gruppen des Substrats unter Bildung von Wasser, das für die Hydrolyse zur Verfügung steht. Die Komponente C, die gebildeten Alkohole sowie die gebildete Essigsäure und nicht in das Harz eingebundene Reaktionspartner sowie Nebenprodukte können nach Trocknung und Aushärtung des Harzes mit Wasser, dem ggfs. ein Netzmittel und/oder ein Alkalihydroxid zugesetzt wird, von der Schicht abgespült werden.

Der Gegenstand der Erfindung wird nachfolgend anhand von Beispielen näher erläutert.

Beispiel 1

Eine Mischung aus 200 g Wasserstoff-Methylpolysiloxan mit einer Molmasse von 2000, 150 g Phenyltrimethoxysilan, 50 g Dimethyldiethoxysilan und 200 g Oktyltriethoxysilan wird mit 52 g Trichloressigsäure vermischt. Die Mischung wird unter ständigem Rühren auf 60 bis 65°C erhitzt und ca. 15 Minuten bei dieser Temperatur gehalten. Das Erhitzen erfolgt unter Verwendung eines Rückflußkühlers, an dem flüchtige Bestandteile kondensieren. Nach Abkühlung der Mischung auf ca. 30°C werden nacheinander 50 ml Isopropanol und 500 ml Heptan zugesetzt. Diese Lösung wird danach mit Heptan oder Cyclohexan verdünnt, bis sie eine Trockensubstanz-Konzentration von 4 bis 8 Gew% hat. Die Lösung wird auf eine Glasplatte aufgesprüht. Nach Verdampfen des Lösungsmittels befindet sich auf der Glasplatte ein dünner Film, der aus einem ausgehärteten Harz besteht, hydrophob ist und auf der Glasplatte fest haftet.

Beispiel 2

In einem Reaktor befinden sich 60 g eines Polysiloxans mit einer Molmasse von 950, das aus Wasserstoffmethylsiloxan- und Dimethylsiloxan-Einheiten besteht. Dieses copolymere Polysiloxan wird mit 60 g eines zweiten copolymeren Polysiloxans gemischt, das aus Wasserstoffmethylsiloxan- und Methyloktylsiloxan-Einheiten besteht und eine Molmasse von 4250 hat. Anschließend werden 25 g Diphenyldimethoxysilan und 180 g Oktyltrimethoxysilan zugefügt. Danach werden 15 g Chlorsulfonsäure zugesetzt. Die Mischung wird unter Rühren bei 20 bis 25°C hergestellt und unter ständigem Rühren auf 40°C erhitzt. Die beim Erhitzen freiwerdenden flüchtigen Bestandteile werden aus dem Reaktor abgeführt. Nach Abkühlung der Mischung auf ca. 30°C werden nacheinander 50 ml Isopropanol und 500 ml Heptan zugesetzt. Danach erfolgt eine weitere Verdünnung mit Heptan oder Cyclohexan bis zu einer Trockensubstanz-Konzentration von 4 bis 8 Gew%.

Eine Glasplatte wurde mit der verdünnten Lösung besprüht und es bildete sich ein abriebfester, hydrophober Film eines Harzes. Die Mischung, die lediglich 50 ml Isopropanol und 500 ml Heptan enthielt, wurde auf eine Glasplatte aufgestrichen. Auch der so hergestellte Film hatte auf der Glasplatte eine gute Haftfestigkeit.

Beispiel 3

200 g Wasserstoffmethylpolysiloxan mit einer Molmasse von 2000 wurden mit 300 g Phenyltrimethoxysilan, 30 g Dimethyldiethoxysilan und 25 g Diphenyldimethoxysilan und 200 g Oktyltrimethoxysilan vermischt. Anschließend wurden 56 g Trichloressigsäure zugesetzt. Diese Mischung wurde unter ständigem Rühren auf 50°C erhitzt und 10 Minuten bei dieser Temperatur gehalten. Flüchtige Bestandteile wurden an einem Rückflußkühler kondensiert. Nach Abkühlung der Mischung auf 30°C wurden nacheinander 50 ml Isopropanol und 500 ml Heptan zugesetzt. Anschließend wurde die Mischung mit Heptan oder Cyclohexan bis zu einer Trockensubstanz-Konzentration von 4 bis 8 Gew% verdünnt.

Die Mischung, die lediglich 50 ml Isopropanol und 500 ml Heptan enthielt, wurde auf eine Glasplatte aufgestrichen. Es bildete sich ein Film, der nach Trocknung eine gute Haftfestigkeit hatte und hydrophob war. Die Mischung, die eine Trockensubstanz-Konzentration von 4 bis 8 Gew% hatte, wurde auf eine Glasplatte aufgesprüht. Nach Trocknung resultierte ein ausgehärteter, hydrophober Film, der eine sehr gute Haftfestigkeit aufwies.

Beispiel 4

20 g Wasserstoffmethylpolysiloxan mit einer Molmasse von 2000 und 80 g eines Cyclopentasiloxans, das aus 5 Dimethylsiloxan-Einheiten besteht und eine Molmasse von 300 hat, wurden mit 100 g Phenyltriacetoxysilan und 200 g Oktyltrimethoxysilan gemischt. Anschließend wurden 30 g Trichloressigsäure zugesetzt. Die Mischung wurde unter ständigem Rühren auf 65°C erhitzt und 10 Minuten bei dieser Temperatur gehalten. Beim Erhitzen freiwerdende flüchtige Bestandteile wurden mittels eines Rückflußkühlers kondensiert. Nach Abkühlung der Mischung auf 35°C wurden nacheinander 20 g 1-1-3-3-Tetramethyl- 1-3-Diethoxysiloxan, 20 ml Isopropanol und 500 ml Heptan zugesetzt. Anschließend erfolgte eine weitere Verdünnung der Mischung mit Heptan oder Cyclohexan bis zu einer Trockensubstanz-Konzentration von 4 bis 8 Gew%. Sowohl die Mischung, die 20 ml Isopropanol und 500 ml Heptan enthielt, als auch die Mischung, die eine Trockensubstanz-Konzentration von 4 bis 8 Gew% hatte, konnten durch Aufstreichen bzw. Aufsprühen auf eine Glasplatte aufgebracht werden, wobei nach Trocknung ein Film resultierte, der eine gute Haftfestigkeit auf der Glasplatte hatte, hydrophob war und sich auch nach mehrmaliger Behandlung mit einem alkalischen Reiniger nicht veränderte.

Bei Verwendung von Heptan und Cyclohexan als Lösungsmittel ergaben sich in jedem Fall für die Oberflächenbeschichtung gleiche Eigenschaften.

Die Trockensubstanz-Konzentration der verdünnten Lösungen wurde durch Verdampfen des Lösungsmittels bei 100°C bis zur Gewichtskonstanz des Rückstandes ermittelt.

## Patentansprüche

1. Mischung zum Behandeln von Substraten, welche Siliciumverbindungen enthalten, insbesondere von Glas oder Keramik, die aus folgenden Komponenten besteht:

   a) aus der Komponente A, die von mindestens einem Polysiloxan gebildet wird, das Si-H-Bindungen enthält und die allgemeine Formel

$$F\ I = R - \left[ \begin{matrix} R \\ Si \\ R \end{matrix} -O- \right]_n - SiR_3$$

oder

F II = 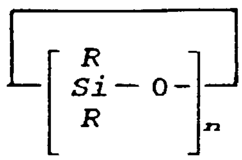

hat, wobei R ein Alkylrest mit 1 bis 12 C-Atomen und/oder ein nicht substituierter oder substituierter Phenylrest ist, wobei die Reste R teilweise durch Wasserstoff ersetzt sind und wobei n in der Formel F I eine Zahl von 2 bis 50 sowie in der Formel F II eine Zahl von 4 bis 50 ist,

b) aus der Komponente B, die von mindestens einem bi-, tri- oder tetrafunktionellen Silan gebildet wird, das die allgemeine Formel

$$FIII = R'_z\ Si\ R''_{4-z}$$

hat, wobei R' ein nicht substituierter oder substituierter Alkylrest mit 1 bis 12 C-Atomen, ein Cycloalkylrest mit 5 bis 6 C-Atomen, ein nicht substituierter oder substituierter Phenylrest und/oder ein Vinylrest ist, wobei R" ein Alkoxy- oder ein $CH_3COO$-Rest ist sowie als funktioneller Rest wirkt, wobei der Alkylteil des Alkoxyrestes 1 bis 12 C-Atome hat und wobei z eine Zahl von 0 bis 2 ist und

c) aus der Komponente C, die von mindestens einer starken, wasserfreien organischen oder anorganischen Säure gebildet wird.

**2.** Mischung nach Anspruch 1, die als bifunktionelles Silan ein Dialkyldialkoxysilan, ein Dicycloalkyldialkoxysilan, ein Diphenyldialkoxysilan, ein Dialkyldiacetoxysilan, ein Dicycloalkyldiacetoxysilan, ein Diphenyldiacetoxysilan, ein Vinylmethyldialkoxysilan oder ein Vinylmethyldiacetoxysilan enthält.

**3.** Mischung nach Anspruch 2, bei der ein Teil des bifunktionellen Silans durch ein Disiloxan ersetzt ist, das die allgemeine Formel

F IV = 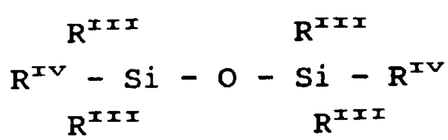

hat, wobei $R^{III}$ ein Alkylrest mit 1 bis 12 C-Atomen ist, wobei $R^{IV}$ ein Alkoxyrest ist und wobei der Alkylteil des Alkoxyrestes 1 bis 12 C-Atome hat.

**4.** Mischung nach Anspruch 1, die als trifunktionelles Silan ein Monoalkyltrialkoxysilan, ein Monocycloalkyltrialkoxysilan, ein Monophenyltrialkoxysilan, ein Monoalkyltriacetoxysilan, ein Monocycloalkyltriacetoxysilan, ein Monophenyltriacetoxysilan, ein Vinyltrialkoxysilan, ein Vinyltriacetoxysilan oder ein Fluoralkyltrialkoxysilan enthält.

**5.** Mischung nach Anspruch 1, die als tetrafunktionelles Silan einen Kieselsäureester der allgemeinen Formel

$$F\ V = Si\ (OR^V)_4$$

enthält, wobei $R^V$ ein Alkylrest mit 1 bis 12 C-Atomen ist.

**6.** Mischung nach Anspruch 1, die als Polysiloxan ein lineares Polysiloxan mit einer Molmasse von 350 bis 15000

enthält.

7. Mischung nach Anspruch 1, die als Säure Chlorsulfonsäure, Benzolsulfonsäure, p-Toluolsulfonsäure oder Trichloressigsäure enthält.

8. Mischung nach Anspruch 7, die 5 bis 7 Gew% Chlorsulfonsäure oder 10 bis 12 Gew% Trichloressigsäure enthält.

9. Mischung nach Anspruch 1, die ein Silan mit einem oder mehreren Vinylresten und $FeCl_3$, $ZnCl_2$, $PtCl_6$ oder $SnCl_4$ in einer Menge von 0,0005 bis 0,01 Gew% enthält.

10. Mischung nach den Ansprüchen 1 bis 9, die 2 bis 4 Gew% eines niederen Alkohols, vorzugsweise Isopropanol enthält.

11. Mischung nach den Ansprüchen 1 bis 10, die ein Lösungsmittel enthält, das aus mindestens einem unpolaren, flüssigen Kohlenwasserstoff und/oder aus mindestens einem Ester besteht.

12. Mischung nach Anspruch 11, die als Lösungsmittel Methyl-, Ethyl- oder Butylacetat, n-Hexan, n-Heptan, Isooktan, Cyclohexan, Pentan, Toluol oder Xylol oder Gemische dieser Stoffe enthält.

13. Mischung nach Anspruch 11 und 12, die auf 1 Gewichtsteil 5 bis 60 Gewichtsteile des Lösungsmittels enthält.

14. Mischung nach den Ansprüchen 11 und 12, die auf 1 Gewichtsteil 90 bis 100 Gewichtsteile des Lösungsmittels enthält.

## Claims

1. A mixture for treating substrates which contain silicon compounds, in particular glass or ceramics, which consists of the following components:

   a) of the component A, which is formed by at least one polysiloxane which contains Si-H bonds and has the general formula

F I =
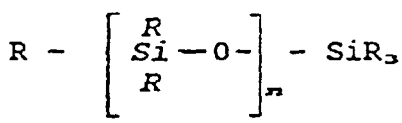

or

F II =
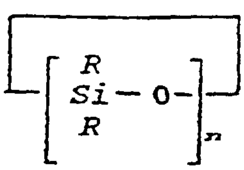

   wherein R is an alkyl radical with 1 to 12 C atoms and/or an unsubstituted or substituted phenyl radical, the radicals R are partially replaced by hydrogen and n in formula F I is a number from 2 to 50 and in formula F II is a number from 4 to 50,

   b) of the component B, which is formed by at least one bi-, tri- or tetrafunctional silane which has the general formula

$$FIII = R'_z\ Si\ R''_{4-z}$$

wherein R' is an unsubstituted or substituted alkyl radical with 1 to 12 C atoms, a cycloalkyl radical with 5 to 6 C atoms, an unsubstituted or substituted phenyl radical and/or a vinyl radical, R" is an alkoxy or a $CH_3COO$ radical and acts as a functional group, the alkyl portion of the alkoxy radical having 1 to 12 C atoms and z being a number from 0 to 2, and

c) of the component C, which is formed by at least one strong, anhydrous organic or inorganic acid.

**2.** A mixture according to Claim 1, which contains as bifunctional silane a dialkyl dialkoxysilane, a dicycloalkyl dialkoxysilane, a diphenyl dialkoxysilane, a dialkyl diacetoxysilane, a dicycloalkyl diacetoxysilane, a diphenyl diacetoxysilane, a vinylmethyl dialkoxysilane or a vinylmethyl diacetoxysilane.

**3.** A mixture according to Claim 2, in which a portion of the bifunctional silane is replaced by a disiloxane which has the general formula

$$F\ IV = R^{IV} - \overset{R^{III}}{\underset{R^{III}}{Si}} - O - \overset{R^{III}}{\underset{R^{III}}{Si}} - R^{IV}$$

wherein $R^{III}$ is an alkyl radical with 1 to 12 C atoms, $R^{IV}$ is an alkoxy radical and the alkyl portion of the alkoxy radical has 1 to 12 C atoms.

**4.** A mixture according to Claim 1, which contains as trifunctional silane a monoalkyl trialkoxysilane, a monocycloalkyl trialkoxysilane, a monophenyl trialkoxysilane, a monoalkyl triacetoxysilane, a monocycloalkyl triacetoxysilane, a monophenyl triacetoxysilane, a vinyl trialkoxysilane, a vinyl triacetoxysilane or a fluoroalkyl trialkoxysilane.

**5.** A mixture according to Claim 1, which contains as tetrafunctional silane a silicic acid ester of the general formula

$$F\ V = Si\ (OR^{V})_4$$

wherein $R^V$ is an alkyl radical with 1 to 12 C atoms.

**6.** A mixture according to Claim 1, which contains as polysiloxane a linear polysiloxane with a molar mass of 350 to 15,000.

**7.** A mixture according to Claim 1, which contains as acid chlorosulphonic acid, benzenesulphonic acid, p-toluenesulphonic acid or trichloroacetic acid.

**8.** A mixture according to Claim 7, which contains 5 to 7% by weight chlorosulphonic acid or 10 to 12% by weight trichloroacetic acid.

**9.** A mixture according to Claim 1, which contains a silane with one or more vinyl radicals and $FeCl_3$, $ZnCl_2$, $PtCl_6$ or $SnCl_4$ in a quantity of 0.0005 to 0.01% by weight.

**10.** A mixture according to Claims 1 to 9, which contains 2 to 4% by weight of a lower alcohol, preferably isopropanol.

**11.** A mixture according to Claims 1 to 10, which contains a solvent which consists of at least one nonpolar, liquid hydrocarbon and/or of at least one ester.

**12.** A mixture according to Claim 11, which contains as solvent methyl, ethyl or butyl acetate, n-hexane, n-heptane, isooctane, cyclohexane, pentane, toluene or xylene or mixtures of these substances.

**13.** A mixture according to Claims 11 and 12, which contains 5 to 60 parts by weight of the solvent for 1 part by weight.

**14.** A mixture according to Claims 11 and 12, which contains 90 to 100 parts by weight of the solvent for 1 part by weight.

**Revendications**

**1.** Mélange pour le traitement de substrats qui contiennent des composés de silicium, en particulier en verre ou en céramique, qui est constitué par les composants ci-après:

a) par le composant A qui est formé par au moins un polysiloxane qui contient des liaisons Si-H et qui répond aux formules générales

F I = 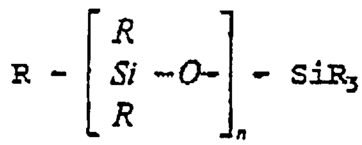

ou

F II = 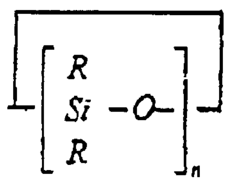

dans lesquelles R représente un radical alkyle contenant de 1 à 12 atomes de carbone et/ou un radical phényle non substitué ou substitué, les radicaux R ayant été remplacés en partie par un radical hydrogène, et n dans la formule F I représentant un nombre de 2 à 50 et, dans la formule F II, un nombre de 4 à 50,

b) par le composant B qui est formé par au moins un silane bi-, tri- ou tétrafonctionnel qui répond à la formule générale:

$$F\ III = R'_z\ Si\ R''_{4-z}$$

dans laquelle R' représente un radical alkyle non substitué ou substitué contenant de 1 à 12 atomes de carbone, un radical cycloalkyle contenant de 5 à 6 atomes de carbone, un radical phényle non substitué ou substitué, et/ou un radical vinyle, R" représentant un radical alcoxy ou un radical $CH_3COO$ et faisant office de radical fonctionnel, la fraction alkyle du radical alcoxy contenant de 1 à 12 atomes de carbone, et z représentant un nombre de 0 à 2, et

c) par le composant C qui est formé par au moins un acide fort organique ou inorganique anhydre.

**2.** Mélange selon la revendication 1, qui contient, à titre de silane bifonctionnel, un dialkyldialcoxysilane, un dicycloalkyldialcoxysilane, un diphényldialcoxysilane, un dialkyldiacétoxysilane, un dicycloalkyldiacétoxysilane, un diphényldiacétoxysilane, un vinylméthyldialcoxysilane ou un vinylméthyldiacétoxysilane.

**3.** Mélange selon la revendication 2, dans lequel une partie du silane bifonctionnel a été remplacée par un disiloxane qui répond à la formule générale:

$$F\ IV = \begin{array}{ccccccccc} & & R^{III} & & & & R^{III} & & \\ R^{IV} & - & Si & - & O & - & Si & - & R^{IV} \\ & & R^{III} & & & & R^{III} & & \end{array}$$

dans laquelle $R^{III}$ représente un radical alkyle contenant de 1 à 12 atomes de carbone, $R^{IV}$ représente un radical alcoxy, et la fraction alkyle du radical alcoxy contient de 1 à 12 atomes de carbone.

**4.** Mélange selon la revendication 1, qui contient, à titre de silane trifonctionnel, un monoalkyltrialcoxysilane, un monocycloalkyltrialcoxysilane, un monophényltrialcoxysilane, un monoalkyltriacétoxysilane, un monocycloalkyltriacétoxysilane, un monophényltriacétoxysilane, un vinyltrialcoxysilane, un vinyltriacétoxysilane ou un fluoralkyltrialcoxysilane.

**5.** Mélange selon la revendication 1, qui contient, à titre de silane tétrafonctionnel, un ester silicique répondant à la formule générale:

$$F\ V = Si\ (OR^{V})_4$$

dans laquelle $R^V$ représente un radical alkyle contenant de 1 à 12 atomes de carbone.

**6.** Mélange selon la revendication 1, qui contient, à titre de polysiloxane, un polysiloxane linéaire possédant une masse molaire de 350 à 15.000.

**7.** Mélange selon la revendication 1, qui contient, à titre d'acide, de l'acide chlorosulfonique, de l'acide benzènesulfonique, l'acide p-toluènesulfonique ou de l'acide trichloracétique.

**8.** Mélange selon la revendication 7, qui contient, à concurrence de 5 à 7% en poids, de l'acide chlorosulfonique ou, à concurrence de 10 à 12% en poids, de l'acide trichloracétique.

**9.** Mélange selon la revendication 1, qui contient un silane contenant un ou plusieurs radicaux vinyle et $FeCl_3$, $ZnCl_2$, $PtCl_6$ ou $SnCl_4$ en une quantité de 0,0005 à 0,01% en poids.

**10.** Mélange selon l'une quelconque des revendications 1 à 9, qui contient, à concurrence de 2 à 4% en poids, un alcool inférieur, de préférence l'isopropanol.

**11.** Mélange selon l'une quelconque des revendications 1 à 10, qui contient un solvant qui est constitué par au moins un hydrocarbure liquide apolaire et/ou par au moins un ester.

**12.** Mélange selon la revendication 11, qui contient, à titre de solvant, l'acétate de méthyle, l'acétate d'éthyle ou l'acétate de butyle, le n-hexane, le n-heptane, l'isooctane, le cyclohexane, le pentane, le toluène ou le xylène ou encore des mélanges de ces substances.

**13.** Mélange selon les revendications 11 et 12, qui contient, pour 1 partie en poids, de 5 à 60 parties en poids du solvant.

**14.** Mélange selon les revendications 11 et 12, qui contient, pour 1 partie en poids, de 90 à 100 parties en poids du solvant.